# EUROPEAN PATENT SPECIFICATION

(11) **EP 3 068 683 B1**
(45) Date of publication and mention of the grant of the patent: **26.02.2020**
(21) Application number: 14861739.2
(22) Date of filing: 14.11.2014
(51) Int. Cl.: B62M 6/45

(54) **AUTOMATIC GEAR SHIFT SYSTEM FOR AN E-BICYCLE**
SCHALTSYSTEM FÜR AUTOMATIKGETRIEBE EINES ELEKTROFAHRRADS
SYSTÈME DE CHANGEMENT DE VITESSE AUTOMATIQUE POUR UNE BICYCLETTE ÉLECTRIQUE

(30) Priority: 15.11.2013 US 201361904508 P
(43) Date of publication of application: 21.09.2016
(73) Proprietor: Robert Bosch GmbH, 70442 Stuttgart (DE)
(72) Inventor: DENNER, Marco Michael, 72793 Pfullingen (DE); ROCZNIK, Thomas, Mountain View, CA 94043 (US)
(86) International application number: PCT/US2014/065648
(87) International publication number: WO 2015/073791

(56) References cited:
- EP-A1- 2 511 166
- EP-A2- 1 129 932
- EP-A2- 1 188 661
- KR-A- 20100 083 312
- US-A- 5 396 420
- US-A- 5 599 244
- US-A1- 2004 051 273
- US-A1- 2009 181 826
- US-A1- 2010 030 437
- US-A1- 2010 030 437
- US-A1- 2012 029 744
- US-A1- 2013 110 335
- US-A1- 2013 110 335

## Description

### FIELD

The present disclosure relates generally to E-bicycles, or pedal-powered bicycles having an auxiliary electric motor. More specifically, the disclosure relates to E-bicycles having a gear shift mechanism and to integration of the gear shift mechanism with the auxiliary motor.

### BACKGROUND

Electric bicycles have a long 'history, dating back to the 1890s. The earliest E-bicycles pre-dated the invention of the derailleur apparatus so the bicycles were fixed gear pedal-powered vehicles. The electric motor in the early E-bicycles was mounted within the rear wheel and later integrated into the crankset hub.

E-bikes are classed according to the power that the electric motor provides and the manner in which the motor power is applied. One class is the pedal-assist E-bike in which the motor speed is regulated by the pedaling. The motor essentially augments the pedal power generated by the rider. This type of E-bike, often called a "pedelec" detects the pedaling speed and/or power and governs the motor speed to help the rider maintain the pedal speed, such as when the rider is struggling up a steep hill. Another class of E-bike is a power-on-demand system in which the rider can activate the electric motor and control the motor speed with a throttle. The power-on-demand E-bike can incorporate pedal assist or disengage the pedal crank arms when the motor is engaged.

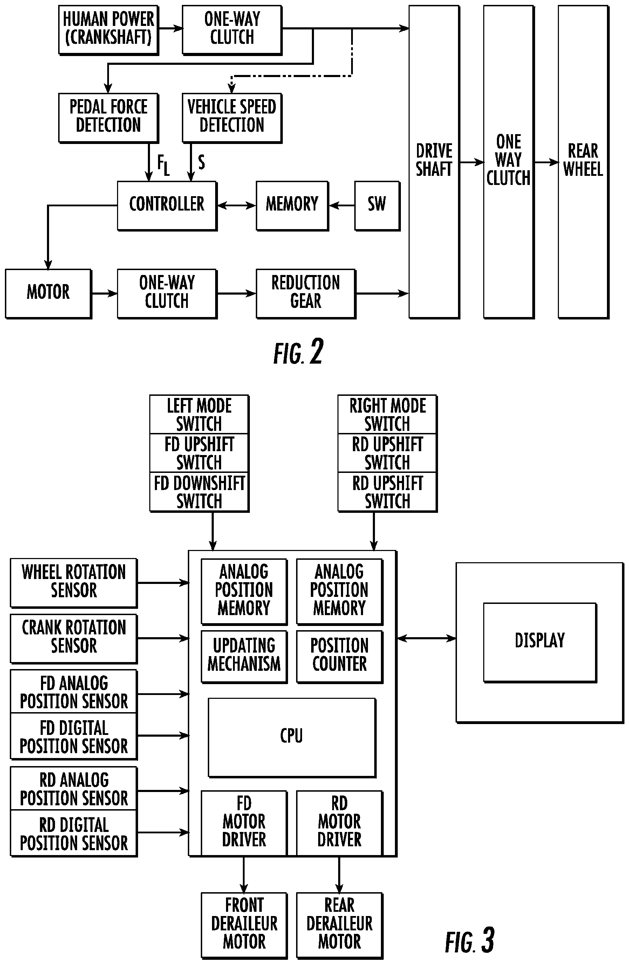

One example of an E-bicycle pedelec is found in U.S. Patent No. 5,474,148 (the ' 148 Patent), the disclosure of which is incorporated herein by reference. In this E-bike, an electric motor is mounted in the bottom bracket and powered by a rechargeable battery supported on the upper frame along with a motor controller. The motor is integrated into the drive shaft of the crank set by way of a one-way clutch and planetary gear set. The E-bike disclosed in the '148 Patent includes a pedal force sensor and a speed detector that provides signals to the controller. The controller applies a rider-selectable assist ratio that governs the amount of power assist provided by the motor, and limit speed values that govern when the motor assist is decreased and when it is deactivated. A general schematic of the components of the electric drive system disclosed in the '148 Patent is shown in **FIG. 2****.** A rider-controlled switch SW can be used by the rider to select a desired assist ratio. The E-bike disclosed in the '148 Patent provides the rider with ability to tailor the motor assist to his/her riding style. However, one difficulty with E-bike of this type is that the system does not optimize the motor operation, which can shorten the battery charge life.

The '148 Patent discloses a typical E-bicycle that is integrated into a single speed system, meaning that the crank set drives a single gear rear wheel. The bicycle thus has a fixed gear ratio based on the ratio between the drive gear of the crank set and the driven gear of the rear hub. The development of the derailleur system has allowed the bicycle to include multiple gears of different diameters to vary the gear ratio between crank set and rear hub. Like the E-bicycle, the derailleur system has a long history, dating back to the late 1890s as well. The modern derailleur system implementing cable shifting was developed in the 1930s and has been the standard bike gearing since then. However, the electronic shifter developed in the 1990s is poised to become the standard gear shift mechanism for consumer bicycles. The electronic shifting mechanism utilizes small motors that move the derailleur between gears in the rear cassette. The first commercially available system was developed by Shimano, Inc., and found its way to road bicycles in 2009. An example of the Shimano system is disclosed in U.S. Patent No. 7,306,531 (the '531 Patent), the entire disclosure of which is incorporated herein by reference. A general schematic of the electronic shifting system disclosed in the '531 Patent is depicted in **FIG. 3****.** The system disclosed in the '531 Patent includes a motor that drives each derailleur toward or away from the gear cluster in response to movement of the shifter mechanism. The shifter mechanism is in the form of an upshift switch and a downshift switch that provide a respective shift signal to a digital controller. The controller receives signals from wheel and crank rotation sensors as well as motor position sensors to provide control signals to the front and rear derailleur motors to perform the requested shift. Electronic shift systems allow for quicker and more precise shifting, but the systems still only react to the operator's gear selection. While professional and avid cyclists are usually able to make an optimum gear selection, most bicyclists are not that attuned to optimum "shifting". For many cyclists, the bicycle is an important mode of transportation so there is a strong desire to make the cycling experience as uncomplicated and as efficient as possible.

The document EP 1 129 932 A2 relates to a motor-driven bicycle, according to the preamble of claim 1, including an automatic gear shifter, which is capable of improving a shift feeling upon gear-shift and controlling a self-running power of a drive motor determined on the basis of an amount of a self-running operation by a driver as a function of a braking state and a vehicle speed.

### SUMMARY

The invention is defined by the appended claims. A control system is provided for a bicycle for use with an electric drive system and an electronic gear shifting device that optimizes when a gear shift is made based on the current conditions of the rider, bicycle and terrain. In one aspect, the control system receives data from several sources, such as bicycle speed, pedal cadence, output power of both the pedal and electric drive system, acceleration, bicycle orientation or attitude, terrain grade, GPS and map information. If selected data or certain calculated values fall outside predetermined threshold values, a gear shift is indicated and automatically performed in an automatic mode of operation or suggested to the rider in a manual mode of operation.

In another aspect, the system includes a user interface that can inform the rider of the current conditions or sensor data and provide an interface for tailoring the shift protocol to the rider's desires. The control system may also incorporate a learning mode to "learn" the rider's shifting habits under particular conditions to later emulate these habits in an automatic mode of operation. The control system may further implement a training mode based on training criteria, such as wattage, pedal cadence, heart rate or efficiency criteria, in which gear shifts are automatically made to maintain the desired training criteria.

### DESCRIPTION OF THE FIGURES

**FIG. 1** is a side view of a bicycle equipped with an electric drive system, an electronic shift system and a controller for both systems according to one aspect of the present disclosure.
**FIG. 2** is a schematic diagram of the components of an electric drive system as disclosed in U.S. Patent No. 5,474,148.
**FIG. 3** is a schematic diagram of the components of an electronic shifting system as disclosed in U.S. Patent No. 7,306,531.
**FIG. 4** is a flowchart of steps of a software program that can be implemented by the controller for the bicycle shown in **FIG. 1****.**
**FIG. 5** is a flowchart of details of one steps of a software program of the flowchart in **FIG. 4****.**

### DETAILED DESCRIPTION

For the purposes of promoting an understanding of the principles of the disclosure, reference will now be made to the embodiments illustrated in the drawings and described in the following written specification. It is understood that no limitation to the scope of the disclosure is thereby intended. It is further understood that the present disclosure encompasses any alterations and modifications to the illustrated embodiments and includes further applications of the principles of the disclosure as would normally occur to one skilled in the art to which this disclosure pertains.

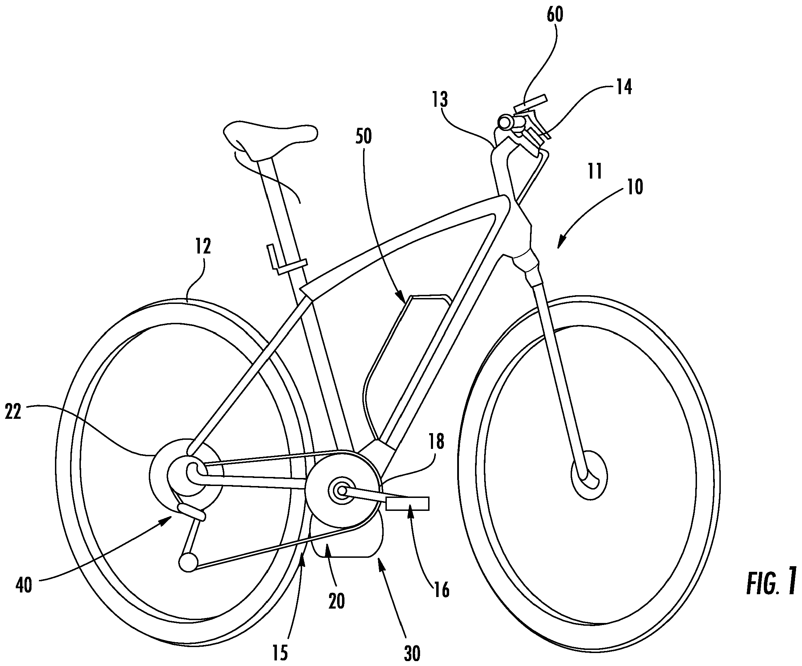

The present disclosure contemplates a system for use with a typical bicycle **10,** such as the hybrid bicycle depicted in **FIG. 1****.** The bicycle includes a frame **11** of known configuration and a rear wheel **12** that is rotated by a drive system **15.** As is typical, the drive system includes pedals on the end of crank arms **16** that rotate a front sprocket arrangement **18.** The sprocket drives a chain **20** that engages a rear gear set **22** in a conventional fashion. The front sprocket **18** arrangement may included multiple chain rings, typically two or three, while the rear gear set or cassette **22** typically includes six or seven gears of increasing diameter (and tooth number). The bicycle **10** further includes a handlebar arrangement **13** which includes shifting mechanisms **14** on the handlebar for shifting the chain **20** between the chain rings of the front sprocket arrangement and the multiple gears of the rear gear set. While a conventional chain-drive bicycle is described herein, it is contemplated that other drive arrangements may be utilized, such systems with different gear ratios, belt-drive systems or continuously variable transmissions. It is understood that reference to "changing gears" or a "gear change" is not intended to limit the drive system to a conventional derailleur system, but instead also contemplates changing gear ratios or drive ratio, such as might occur with a continuously variable transmission device.

In one aspect of the present disclosure, the bicycle **10** is an E-bike that includes an electric drive assembly **30** configured to rotate the chain **20** in lieu of or in addition to the rider-driven crank arms **16.** The electric drive assembly may be configured like the drive assembly disclosed in the '148 Patent described above, or may have other configurations capable of providing electrically-driven power to the front sprocket or to the rear gear set. The bicycle further includes an electronic shifting mechanism **40** that is at least configured to shift the chain between gears of the rear gear set **22** and may also be configured to shift between sprockets of the front sprocket arrangement **18.** The electronic shifting mechanism **40** may be configured as disclosed in the '531 Patent.

A power supply and control system **50** may be mounted to the frame **11** and configured to provide clearance from the rider's legs. The power supply may include a rechargeable battery pack with an appropriate input socket for mating with a separate battery charger. Alternatively, the power supply may include a replaceable battery pack that itself may be rechargeable. The power supply provides power to both the electric drive assembly **30** and the electronic shifting mechanism **40,** as well as to a microprocessor-based or digital controller and associated memory within the control system **50** that implements control software or algorithms. The control system, and particularly the microprocessor, interfaces with the pedal force detection element (to determine pedaling power or wattage of the rider) and speed detection element of the electric drive system **30** (see **FIG. 2**) as well as with the wheel and crank rotation sensors of the electronic shifting mechanism **40** (see **FIG. 3**). The electric drive system may also be provided with sensors operable to measure the output of the electric motor, and in particular the output power or wattage of the motor. The sensors may include conventional motor speed and torque sensors with appropriate software or electronic components (either associated with the controller **50** or with the sensors) to generate a signal indicative of the motor operating parameters, including at least wattage.

The control system **50** is also connected to a user interface **60** that may be mounted to the handlebars **13** or front stem of the bicycle **10.** The user interface **60** may be a graphical user interface (GUI) that allows the rider to activate or deactivate the electric components of the bicycle, define the operating parameters of the electric components and view a display of the system status. In addition, the user interface **60** may include a global position system (GPS) that is operable to determine the rider's global location in real-time and/or in relation to map information concerning the route that the rider is following. The GPS system may be used in conjunction with or in lieu of the bicycle speed sensor to determine the bicycle speed and acceleration. Alternatively or additionally, a separate accelerometer may be provided to determine the bicycle acceleration/deceleration. The GUI **60** or control system **50** may also incorporate a gyroscope or other known device to sense the orientation or attitude of the bicycle - i.e., whether the bicycle is level or angled upward or downward. The control system may further include braking sensors associated with the brake levers on the handlebars to indicate whether the rider is deliberately braking the bicycle.

In one aspect of the present disclosure, the control system **50,** and particularly the microprocessor of the control system, is adapted to continuously monitor all of the sensor data and to calculate certain performance values, such as power. The control system is adapted to then compare the sensor data and/or performance values to predetermined thresholds to determine whether a gear shift is needed for loadless shifting and/or to optimize both rider pedal power and motor power. In one aspect, the software implemented by the control system **50** or its microprocessor may be configured to optimize the performance of the electric drive assist motor, for instance to prevent excessive or unnecessary usage of the motor assist or to optimize the power output of the motor when motor assist is warranted.

For instance, if the bicycle is traveling on a generally level plane, the bicycle speed remains generally constant and neither the pedal power nor the motor output power or wattage changes significantly. In this instance, the gearing is appropriate and there is no need to shift to a different gear or gear ratio. However, there may be a need to shift to a higher or lower gear under other circumstances, even when traveling in a level plane. For example, if the bicycle speed increases but the total power output (pedal and motor) decreases below a threshold or range value, it may be desirable to shift to a higher "more difficult" gear to match the power output with the bicycle speed. Conversely, if the bicycle speed decreases, no braking is sensed, and the power output increases, it may be desirable to shift to a lower "easier" gear to optimize power output and to maintain a desired bicycle speed.

The control system **50** is also operable to control the electronic shifting when the bicycle is traveling uphill, as determined by the gyroscope and/or by the GPS data. It is noted that uphill/downhill traveling may also be determined by a barometric altimeter, as found in some navigation devices, such as the Garmin Edge® devices. Appropriate software implemented by the processor within the control system **50** evaluates the relevant data to determine whether the rider is traveling uphill or downhill. If a determination is made that the bicycle is traveling uphill and sensor data provided to the control system **50** establishes that the bicycle speed is decreasing and/or the power output is increasing, the control system can direct the electronic shifting system **40** to downshift to a larger gear in the rear gear set **22** and/or shift to a smaller front sprocket as needed to optimize the power output and to maintain the bicycle speed. As frequently occurs, even when the uphill grade is constant the pedal rotation decreases, the pedal force increases and the bicycle decelerates as the rider becomes more fatigued or struggles to maintain speed. The control system determines this condition through the sensor data and orders a downshift to help the rider and electric motor maintain speed. Alternatively, the control system may be calibrated to maintain a generally constant power output rather than a constant speed, particularly as the uphill grade increases.

Similar adaptations are made when the bicycle is traveling downhill. In this circumstance the bicycle speed typically increases while the power output from the rider and motor decreases. An acceleration may also be detected and used by the control system **50** to direct an upshift of the rear gear set and/or a shift to the larger front chain ring/sprocket. Again, the goal is to optimize the rider and motor power output to the bicycle speed.

The control system **50** may also include a gear position detector that stores a value indicative of the gear engaged by the rear derailleur when the bicycle is stopped. The gear position detector may be modified appropriately for use with a continuously variable transmission to determine an effective "gear position" or gear ratio of the transmission. The control system can then use this stored gear data when the rider resumes riding the bicycle, such as to activate the electric motor to assist start-up when the gearing is too high for a standing start, rather than initiate an immediate downshift which might be disruptive to the rider. For instance, the stored gear data may be in the form of a look-up table relating gear position to bicycle speed ranges. If the current gear position is determined to correspond to a gear position in the table look-up that is related to a non-zero bicycle speed, the controller can direct activation of the motor at the first pedal stroke by the rider. The control system may implement a different protocol that senses when the bicycle is at a stop and then automatically downshift to a suitable starting gear, with or without motor assist.

The control system may also incorporate a "manual" mode in which the rider directly controls the electronic shifting device. In this mode, the control system may still evaluate the sensor data to determine when an optimized gear shift should occur. The control system **50** may then display a "suggestion" to the rider on the user interface **60** so that the rider can decide whether to shift. The control system may also incorporate an override component that can be activated by the rider operating the handlebar shifting mechanism **14** when the control system is otherwise automatically controlling gear shifting or activated by a separate switch, such as an icon on the user interface **60.** For instance, a rider may desire to drive up a hill in a higher gear while standing on the pedals, rather than seated pedaling at a faster crank rotation rate. The control system would ordinarily detect an imbalance between power and speed and order a downshift, but the rider may desire to override this action to maintain the current gear.

In another aspect, the control system **50** integrates GPS data with map information stored in a memory of the control system **50** or read from a separate navigator device, such as the Garmin Edge® devices. In particular, the control system may anticipate changes in grade that are likely to necessitate a gear change, such as when the rider is at the base of a hill above a certain grade. Rather than wait until the speed or pedal cadence drops, the control system may initiate a gradual downshift in advance of each incremental increase in grade, much like a rider might otherwise do when attacking an increasingly steeper hill. The software implemented by the processor of the control system may direct a downshift at a predetermined distance or travel time prior to the grade increase. The control system **50** may allow the rider to program this predetermined distance or travel time according to his/her riding preferences.

The control system **50** is configured to compare the sensor data to predetermined thresholds and data ranges that are calibrated to avoid unnecessary shifting or shift cycling in which the electronic shifting device repeatedly upshifts and downshifts to "find" the proper gear. For instance, a rider may decide that grade changes of one degree (up or down) do not require any gear change. Likewise, output power changes within a particular range, for instance a ±10 watt range or a ±105 change in wattage, may not require a gear change. It is contemplated that this "anticipatory" gear shift feature may be combined with or even overridden by the protocol described above which compares speed and power to thresholds to determine whether the rider is struggling.

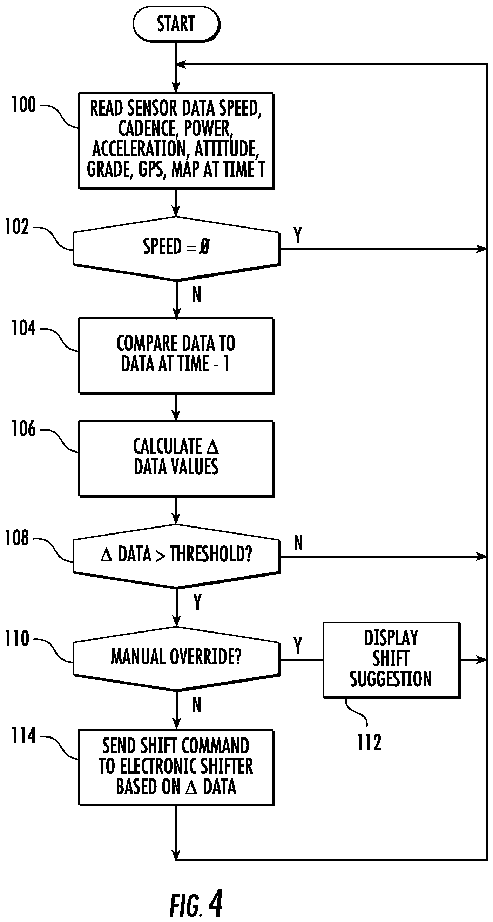

An exemplary flowchart for a software program implemented by the control system **50** is depicted in **FIG. 4****.** The controls system can be activated through the user interface **60** or by a switch on the control system **50** itself. In step **100** the control system reads data from all of the sensors at a time "T". The sensors may provide data for speed, cadence (pedal rotation), power (pedal and motor), acceleration (from GPS data or an accelerometer), bicycle attitude or terrain grade (from a gyroscope, GPS or other suitable sensors) and GPS. If so equipped, the control system may also read map data that is resident on or uploaded to the control system or user interface. Additional sensors may provide data about the cyclist, such as a heart rate monitor or even a VO₂ₘₐₓ sensor. If the speed is determined in step **102** to be zero (0), the bicycle is stationary and there is no need to shift gears so the program flow returns to the first step **100** of reading sensor data. In one modification, the control system may evaluate the current gear position and determine that it is not a proper starting gear, in which case a shift command may be generated.

Once the speed is non-zero, the bike is moving and the program flow continues to the next step **104** in which the data at time T is compared to the data at a prior time **T-1** obtained from a memory of the control system **50.** It should be understood that the processor of the control system may be configured to continuously check sensor data and perform the steps shown in **FIG. 4** based on the clock rate of the processor, which is typically fractions of a second. However, meaningful changes in sensor data do not occur over such small time periods, so the control system may be configured to compare data at a prior time **T-1** that spans a meaningful time gap, such as 1-5 seconds. The control system may incorporate a filter to prevent rapid cycling due to spurious changes in data during a sample interval. The filter may be applied to the data from each individual sensor or to the calculated response of the control system. For instance, the processor may be operable to ignore changes in sensor data that are less than a predetermined amount or percentage. The sample rate may also be modified depending upon the particular riding condition. For instance, during a sudden deceleration, such as when a rider is quickly braking for a stop light, rapid changes in data can be expected. Thus, the control system software can adjust the sample interval or filter based on whether the bicycle brakes have been applied so that a rapid downshift can occur while the bicycle is decelerating to ensure that a low enough gear has been selected to allow the cyclist to easily restart when the light turns green. In this instance, the control system processor can evaluate data from a brake sensor over successive time intervals to determine that braking is occurring, in which event the sample interval or filter can be changed to permit more rapid evaluation of the sensor data and determination of the gear shift requirements.

In the next step **106** a difference or Δ data value is calculated for each of the sensor data or the calculated values based on the sensor data. The Δ data values or selected ones of the Δ data values are then compared in step **108** to predetermined threshold values stored in memory in the control system. Data values for time **T** may also be compared to associated threshold values, depending upon the shift selection algorithm being used. If no threshold value is exceeded the program flow returns to the beginning step **100** to take a new reading of the sensors. On the other hand, if an appropriate threshold is exceeded the next action of the control system depends on whether the rider has elected to override the automatic shift protocol as determined in step **110.** If so, then the control system displays a shift suggestion on the user interface in step **112.** On the other hand, if the control system remains in the automatic mode, the system sends a shift command in step **114** to the electronic shifting device **40** based on the sensor data and the Δ data values - i.e., to upshift or downshift to maintain an optimum power output and speed relationship. Once the shift command has been implemented the software returns to the initial step **100** and this cycle continues as long as the control system **50** is activated.

The user interface **60** may be configured to allow the rider to interface directly with the control system **50,** and particularly with the microprocessor and control software implemented by the microprocessor. It is further contemplated that the user interface itself may incorporate the microprocessor and the control software, such as in the form of an app on a "smart" phone. The rider may thus establish threshold values for speed, pedal or motor or combined pedal/motor power output, pedal cadence, motor speed, bicycle attitude or terrain grade, and acceleration. The rider may also select which parameters will be used to determine optimum shift points, such as exclusively bicycle speed, pedal and/or motor power output, acceleration/deceleration or terrain grade, or a combination of any of the sensed values.

The control system and associated software may also be configured for a "training" mode that is independent of the route and terrain. In one example, the rider may specify a desired wattage, pedal cadence, bicycle speed or heart rate to be maintained, or may specify a wattage, pedal cadence, bicycle speed or heart rate profile for a specified time. In this case, the control system may be configured to actually increase the difficulty by upshifting if the rider's wattage or heart rate fall below a desired threshold, or if the cadence or speed exceeds a desired threshold. In a cool down mode, the control system may adjust the gearing and invoke the electric motor assist to increase cadence or reduce wattage or heart rate. The control system and associated software may incorporate a pre-programmed training profile or may be configured to allow the user to create his/her own workout program, including "on-the-fly" adjustments as needed. In yet another aspect, the control system may be configured to measure and optimize pedaling efficiency. In this aspect, the control system evaluates power, speed and cadence and compares this data with an efficiency curve stored in memory to determine whether an upshift or downshift is necessary to achieve optimum pedaling efficiency.

The control system **50** and associated software may also be configured to "learn" a rider's shifting habits. For instance, some riders prefer to push a larger gear at a lower cadence on the "flats" while other riders prefer a higher cadence and thus a smaller gear. Some riders prefer to power up a hill in a larger gear while standing on the pedals, while other riders prefer a higher cadence that is even higher than the cadence on the flats. The control system software can thus be provided with a learning mode that records the rider's manual shifting pattern in relation to the sensor data received by the control system. This learned pattern can then be used to set the thresholds used to determine when a shift is to be made in the automatic mode of operation. For instance, if the sensor data shows that the rider is riding up a particular gradient hill in a large gear and low cadence, the control system can establish the cadence threshold for the particular gradient. Subsequently, the control system **50** will only invoke an automatic shift if the rider's cadence falls below that lower cadence threshold at the particular uphill gradient.

It is contemplated that the control system **50** described herein may be used on a bicycle with only an electronic shifting device **40.** However, the control system has its optimum utility when used on a bicycle with both an electronic shifting device and an electric drive system **30,** such as the bike **10** of **FIG. 1****.** For this type of bicycle, the control system provides an optimum gear shifting protocol that prevents the motor from working too much or too hard while providing the rider with an optimum riding experience. The controls system and exemplary program flow depicted in **FIG. 4** optimizes the overall efficiency of the electric motor as well as the rider-powered pedals. Optimized efficiency of the motor means that the motor will only be used when and in the manner necessary for the particular riding conditions, which in turn means that the motor will draw less from the rechargeable battery. This translates into extended battery life as well as extended range before a recharge or battery replacement is necessary. From the standpoint of the casual rider, the control system **50** described herein simplifies the riding experience, and makes the rider's trip from point A to point B more efficient and ultimately more enjoyable.

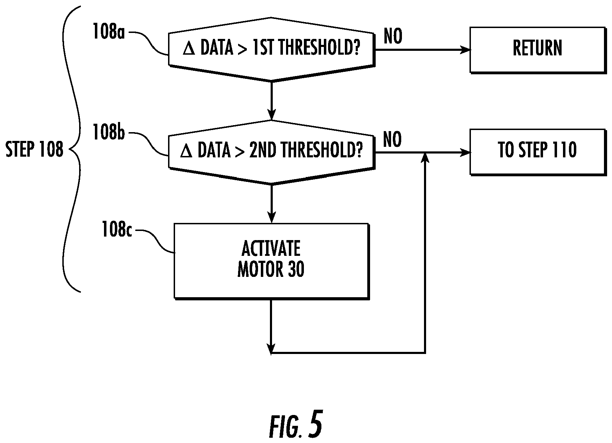

It is thus contemplated that processor of the control system **50** may implement software that follows the steps the flowchart of **FIG. 4** augmented with additional steps to invoke the motor **30** to assist the rider. For instance, steps **108** and **114** may be modified to activate or deactivate the motor **30** rather than or in addition to initiating a gear shift. Step **108** may be modified to evaluate two thresholds for the sensor data, as illustrated in the flowchart of **FIG. 5****.** The first threshold may relate to normal pedal power for the bicycle. The second threshold arises under more severe conditions in which the rider would be unable to sustain a desired speed, in which case the motor assist is activated. Thus, in step **108,** the processor first determines whether the lower first threshold is exceeded in step **108a** and then whether the higher second threshold is exceeded in step **108b.** If only the first threshold is exceeded the second conditional step **108b** fails and control passes to step **110.** In this instance, step **114** proceeds as described above. On the other hand, if both thresholds are exceeded the motor **30** is activated in step **108c.** Alternatively, a trigger value may be set in step **108c** that is subsequently read in step **114,** at which time the motor **30** may be activated to assist the rider at the same time that a gear shift occurs. A gear shift may or may not be initiated depending upon the sensor data. The same conditional step **108** may also determine when it is necessary to deactivate the motor based on other data thresholds.

The program flow illustrated in the flowchart of **FIG. 4** continues even when the electric motor assist has been invoked. The sensor data read in step **100** includes data from the motor, such as power and motor speed, and this data can also be compared to motor operating thresholds to determine whether a gear shift is warranted while under motor assist. Just as a rider's pedaling power may demonstrate that the rider is struggling to maintain speed or cadence, the electric motor may also struggle at certain gearing and under certain conditions (such as traveling up hill) or may over-rev if the gearing is not properly paired to the bicycle speed. Thus, the comparisons discussed above with respect to **FIG. 4** are continuously made in the motor assist mode to ensure that the motor is operating at its highest efficiency by ordering a gear shift when appropriate.

While the invention has been illustrated and described in detail in the drawings and foregoing description, the same should be considered as illustrative and not restrictive in character.

## Claims

1. An automatic gear shift system for a bicycle (10) having an electronic device for changing gear ratio (40), the system comprising:
at least one sensor operable to sense one or more of bicycle (10) speed, pedal cadence, and pedal power;
a control system (50) having a processor operable to execute program instructions to;
receive data from the at least one sensor;
determine a condition change in the data and/or in a calculated value based on the data over a predetermined interval;
compare the condition change to at least one threshold value associated with the at least one sensor and/or the calculated value stored in a memory of the control system (50); and
send a command to the electronic device to execute a change in gear ratio if the condition change exceeds the at least one threshold value,
wherein:
the at least one sensor includes at least one sensor operable to determine external conditions to the bicycle (10); and
the at least one threshold is determined in relation to the external conditions, **characterized in that**
the at least one sensor includes a GPS receiver and the external conditions includes whether the bicycle (10) is traveling uphill or downhill, and
the processor of the control system (50) is operable to execute program instructions to:
evaluate data from the GPS receiver to determine an upcoming change in grade; and
execute a change in gear ratio prior to the change in grade.

2. The automatic gear shift system of claim 1, in which the bicycle is an E-bicycle with an electric motor assist, wherein the processor of the control system is operable to execute program instructions to compare the condition change to a second threshold different from the at least one threshold and to send a command to activate the electric motor assist if the condition change exceeds the second threshold.

3. The automatic gear shift system of claim 1, in which the bicycle (10) is an E-bicycle (10) with an electric motor assist (30), wherein:
the at least one sensor includes a motor sensor for an operating condition of the electric motor; and
the processor of the control system (50) is operable to execute program instructions to compare the change in data from the motor sensor to at least one threshold value associated with the motor sensor.

4. The automatic gear shift system of claim 3, wherein the operating condition of the electric motor includes one or more of motor speed, motor torque and motor output power.

5. The automatic gear shift system of claim 4, the condition change includes a change in a calculated value of a combination of pedal power and motor power output.

6. The automatic gear shift system of claim 1, wherein:
the at least one sensor includes at least one sensor to determine whether the bicycle (10) is level or angled upward or downward; and
the at least one threshold is determined in relation to the result of said determination whether the bicycle (10) is level or angled upward or downward.

7. The automatic gear shift system of claim 1, wherein the control system (50) is operable in a learning mode to generate and store threshold values based on the gear shift habits of the rider while riding the bicycle (10) in the learning mode.

## Patentansprüche

1. Schaltsystem für Automatikgetriebe eines Fahrrads (10) mit einer elektronischen Vorrichtung zum Ändern des Übersetzungsverhältnisses (40), wobei das System umfasst:
mindestens einen Sensor, der eines oder mehr aus Geschwindigkeit, Trittfrequenz und Pedalkraft des Fahrrads (10) erfasst;
ein Steuersystem (50) mit einem Prozessor, der zum Ausführen von Programmanweisungen betreibbar ist, um:
Daten von dem mindestens einen Sensor zu empfangen;
eine Zustandsänderung in den Daten und/oder in einem berechneten Wert basierend auf den Daten über ein vorgegebenes Intervall zu bestimmen;
die Zustandsänderung mit mindestens einem Schwellenwert, der dem mindestens einen Sensor zugeordnet ist, und/oder dem berechneten Wert, der in einem Speicher des Steuersystems (50) gespeichert ist, zu vergleichen; und
einen Befehl an die elektronische Vorrichtung zu senden, um eine Änderung des Übersetzungsverhältnisses durchzuführen, wenn die Zustandsänderung den mindestens einen Schwellenwert überschreitet,
wobei:
der mindestens eine Sensor mindestens einen Sensor umfasst, der dazu betreibbar ist, die äußeren Bedingungen am Fahrrad (10) zu bestimmen; und
der mindestens eine Schwellenwert in Abhängigkeit von den äußeren Bedingungen bestimmt wird,
**dadurch gekennzeichnet, dass**
der mindestens eine Sensor einen GPS-Empfänger umfasst und die äußeren Bedingungen umfassen, ob das Fahrrad (10) bergauf oder bergab fährt, und
der Prozessor des Steuersystems (50) dazu betreibbar ist, Programmanweisungen auszuführen, um:
die Daten des GPS-Empfängers auswerten, um eine bevorstehende Veränderung der Steigung zu bestimmen; und
eine Änderung des Übersetzungsverhältnisses vor der Änderung der Steigung durchzuführen.

2. Schaltsystem für Automatikgetriebe nach Anspruch 1, bei dem das Fahrrad ein E-Fahrrad mit einem elektromotorischen Hilfsantrieb ist, wobei der Prozessor des Steuersystems dazu betreibbar ist, Programmanweisungen auszuführen, um die Zustandsänderung mit einem zweiten Schwellenwert zu vergleichen, der sich von dem mindestens einen Schwellenwert unterscheidet, und einen Befehl zum Aktivieren des elektromotorischen Hilfsantriebs zu senden, wenn die Zustandsänderung den zweiten Schwellenwert überschreitet.

3. Schaltsystem für Automatikgetriebe nach Anspruch 1, bei dem das Fahrrad (10) ein E-Fahrrad (10) mit einem elektromotorischen Hilfsantrieb (30) ist, wobei:
der mindestens eine Sensor einen Motorsensor für einen Betriebszustand des Elektromotors umfasst; und
der Prozessor des Steuersystems (50) dazu betreibbar ist, Programmanweisungen auszuführen, um die Änderung der Daten vom Motorsensor mit mindestens einem dem Motorsensor zugeordneten Schwellenwert zu vergleichen.

4. Schaltsystem für Automatikgetriebe nach Anspruch 3, wobei der Betriebszustand des Elektromotors eines oder mehr aus der Motordrehzahl, dem Motordrehmoment und der Motorleistung umfasst.

5. Schaltsystem für Automatikgetriebe nach Anspruch 4, wobei die Zustandsänderung eine Änderung eines berechneten Wertes einer Kombination aus Pedalkraft und Motorleistung umfasst.

6. Schaltsystem für Automatikgetriebe nach Anspruch 1, wobei:
der mindestens eine Sensor mindestens einen Sensor umfasst, um zu bestimmen, ob das Fahrrad (10) eben oder nach oben oder unten geneigt ist; und
der mindestens eine Schwellenwert in Abhängigkeit vom Ergebnis der Bestimmung bestimmt wird, ob das Fahrrad (10) eben oder nach oben oder unten geneigt ist.

7. Schaltsystem für Automatikgetriebe nach Anspruch 1, wobei das Steuersystem (50) in einem Lernmodus betreibbar ist, um Schwellenwerte basierend auf den Schaltgewohnheiten des Fahrers zu erzeugen und zu speichern, während dieser das Fahrrad (10) im Lernmodus fährt.

## Revendications

1. Système de changement de vitesse automatique pour une bicyclette (10) ayant un dispositif électronique pour changer le rapport de vitesse (40), le système comprenant :
au moins un capteur utilisable pour détecter un ou plusieurs parmi une vitesse de bicyclette (10), une cadence de pédalage et une puissance de pédalage ;
un système de commande (50) ayant un processeur étant utilisable pour exécuter des instructions de programme pour :
recevoir des données en provenance de l'au moins un capteur ;
déterminer un changement de condition dans les données et/ou dans une valeur calculée sur la base des données sur un intervalle prédéterminé ;
comparer le changement de condition à au moins une valeur seuil associée à l'au moins un capteur et/ou à la valeur calculée stockée dans une mémoire du système de commande (50) ; et
envoyer une commande au dispositif électronique pour exécuter un changement de rapport de vitesse si le changement de condition dépasse l'au moins une valeur seuil,
l'au moins un capteur comprenant au moins un capteur utilisable pour déterminer des conditions externes à la bicyclette (10) ; et
l'au moins un seuil étant déterminé en fonction des conditions externes,
**caractérisé en ce que**
l'au moins un capteur comprend un récepteur GPS et
les conditions extérieures comprennent le fait que la bicyclette (10) se déplace en montée ou en descente, et
le processeur du système de commande (50) est utilisable pour exécuter des instructions de programme pour :
évaluer les données provenant du récepteur GPS pour déterminer un changement de pente à venir ; et
exécuter un changement de rapport de vitesse avant le changement de pente.

2. Système de changement de vitesse automatique selon la revendication 1, la bicyclette étant une bicyclette électrique avec une assistance par moteur électrique, le processeur du système de commande étant utilisable pour exécuter des instructions de programme afin de comparer le changement de condition à un second seuil différent de l'au moins un seuil et pour envoyer une commande pour activer l'assistance par moteur électrique si le changement de condition dépasse le second seuil.

3. Système de changement de vitesse automatique selon la revendication 1, la bicyclette (10) étant une bicyclette électrique (10) avec une assistance par moteur électrique (30),
l'au moins un capteur comprenant un capteur de moteur pour une condition de fonctionnement du moteur électrique ; et
le processeur du système de commande (50) étant utilisable pour exécuter des instructions de programme afin de comparer le changement de données provenant du capteur de moteur à au moins une valeur seuil associée au capteur de moteur.

4. Système de changement de vitesse automatique selon la revendication 3, la condition de fonctionnement du moteur électrique comprenant un ou plusieurs parmi une vitesse de moteur, un couple moteur et la puissance de sortie du moteur.

5. Système de changement de vitesse automatique selon la revendication 4, le changement de condition comprenant un changement d'une valeur calculée d'une combinaison de la puissance de pédalage et de la puissance de sortie du moteur.

6. Système de changement de vitesse automatique selon la revendication 1,
l'au moins un capteur comprenant au moins un capteur pour déterminer si la bicyclette (10) est à niveau ou inclinée vers le haut ou vers le bas ; et
l'au moins un seuil étant déterminé en fonction du résultat de ladite détermination du fait que la bicyclette (10) est à niveau ou inclinée vers le haut ou vers le bas.

7. Système de changement de vitesse automatique selon la revendication 1, le système de commande (50) étant utilisable dans un mode d'apprentissage pour générer et stocker des valeurs de seuil sur la base des habitudes de changement de vitesse du cycliste pendant qu'il conduit la bicyclette (10) dans le mode d'apprentissage.
